# EUROPEAN PATENT SPECIFICATION

(11) **EP 0 768 192 B1**
(45) Date of publication and mention of the grant of the patent: **22.08.2001**
(21) Application number: 96307367.1
(22) Date of filing: 10.10.1996
(51) Int. Cl.: B60C 23/04

(54) **Apparatus and method for alarming abnormality of tyre air pressure**
Gerät und Verfahren zum Warnen vor Abweichungen des Reifendrucks
Appareil et procédé d'alarme d'anomalie de pression d'un pneumatique

(30) Priority: 11.10.1995 JP 26289895
(43) Date of publication of application: 16.04.1997
(73) Proprietor: Sumitomo Rubber Industries Ltd., Kobe-shi, Hyogo 651 (JP)
(72) Inventor: Horie, Hiroto, Uozumi-cho, Akashi-shi, Hyogo-ken (JP)
(74) Representative: Stewart, Charles Geoffrey

(56) References cited:
- EP-A- 0 036 755
- WO-A-94/06640
- DE-A- 3 540 599
- DE-A- 4 303 583

## Description

The present invention relates to an apparatus and method for alarming or signalling abnormality of tyre air pressure. More specifically it relates to an apparatus for alarming abnormality of tyre air pressure configured to display information such as the position of an abnormal tyre, the presence of a failure in the apparatus itself and a means of displaying such information in a way so as not to deviate the attention of a driver and thus be dangerous for the driver.

It is desirable that a tyre's air pressure is essentially within a range which is set for a vehicle. However, air pressure drop due to puncture, damage to a valve or air leak from an inner liner and air pressure rises due to excessive load or other cause are both problems. When a vehicle continues driving with air pressure too low or too high the tyre might burst and cause an accident in the worst case. Thus, many apparati have been proposed to alarm abnormality of tyre air pressure. For example, there had been a proposed method which compares the wheel speeds of the four wheels; a method of judging information from an internal pressure sensor mounted on a wheel; a method of judging tyre air pressure from displacement of a resonance frequency obtained by feeding the wheel speed of the four wheels into an FFT analyser; and a method using the frequency of movement of the suspension under a spring of the vehicle.

In the case where those apparati for alarming abnormality of a tyre's internal air pressure detect an abnormality of a tyre's internal air pressure then, in order to indicate which tyre is abnormal if there is provided only one indication section, it needs to indicate it by the number of blinks of the lamp, or by connecting the detected result to an external unit (a device capable of displaying characters, for example, a monitor for navigation or a dot-matrix display) to show the information. However, it is costly to provide such an external unit, and it is too complicated for the driver when driving the vehicle to read the information displayed by blinking, thereby hindering driving and becoming dangerous.

Therefore, it is necessary to provide a unit capable of activating an ACU (Electronic Control Unit) after the vehicle has stopped at a safe place, so the driver may then observe the numbers of blinks of the lamp or the contents of the characters displayed on the external unit to allow the position of the abnormal tyre to be recognised.

Moreover, some apparati for alarming abnormality of a tyre's internal air pressure have an internal failure detection system which is equipped with a non-volatile memory to store the contents of that failure as a failure code, as defined in the preamble of claim 1.

Then, later, when the apparatus which has indicated a failure is handed in to a dealer's office to be repaired, a trigger can be supplied so that the ECU displays the failure code on the display section. This may be by means of:
(1) connecting the specific terminal of the ECU so it is short-circuited to the body earth or GND (earth) terminal with a wire to change the potential of the specific terminal;
(2) rapidly turning on and off the signal fed to the ECU such as a braking signal for a specific time to make the ECU recognise that the braking operation is specific;
(3) and connecting a communication of an exclusive unit to the apparatus.

However, these steps (1) - (3) require a special unit or complicated procedure that carries out a timing operation.

Other prior art proposals include DE 35 40 599 disclosing a diagnostic systm for an automobile using a display in an instrument panel for displaying diagnostic information, but this utilises a special diagnostic connector not available to the driver for entering into a diagnose mode in which the diagnostic information can be displayed or an external diagnostic unit which is not operable by a driver.

In view of the above circumstances, it is an object of the present invention to provide an apparatus for alarming abnormality of tyre air pressure wherein, other than a normal operation mode that is entered only by turning on the ignition (starting of an engine), a special operation mode that is not entered turned on or switched) during driving is set; the driver can concentrate his attention to driving and is safe since no information that deviates the attention of the driver during driving is indicated and no troublesome operation is required; and it is capable of entering the special operation mode with a simple operation while stopping the vehicle and capable of knowing the information in the special operation mode.

According to the present invention the objective is achieved by the subject matter of claims 1 and 4; further advantageous embodiments being defined in the sub-claims.

In the apparatus for alarming abnormality of tyre air pressure in the present invention, the normal operation mode means a mode that is entered by turning on the ignition (starting of an engine). This normal operation mode includes a tyre depressurisation monitoring mode and a self-diagnosis mode that does not disturb the driver even if they are displayed on the display section during driving, since simple information is displayed.

On the other hand, the special operation mode includes a mode that displays complicated information that is difficult to recognise at a glance such as depressurised tyre display mode and failure code mode. The depressurised tyre display mode is to display the position of the depressurised tyre. The failure code display mode is to display the presence of internal and external failures of the main apparatus for alarming abnormality of tyre air pressure and the type of failure with a failure code expressed by simple symbols, alphanumeric characters, HIRAGANA- characters, or KATAKANA-characters so that it is fairly complicated information, taking time for reading.

In the present invention, the information that takes such time for reading is specified as the information in special operation mode and configured not to be entered on turning on the ignition as in the case of normal operation mode. Such a configuration provides the effect that the driver can concentrate on driving and is safe, without being disturbed by the information in the special operation mode.

Moreover, the operation for entry into the special operation mode in the present invention uses two configurations: (1) where the operation is executed when the ignition is turned on while pressing an input switch connected to the ECU that is used normally for other purposes, or (2) when the operation is executed when the ignition is turned on while pressing an input switch connected to the ECU that is used normally for other purposes and, in both configurations, further, after it is confirmed that the wheel speed is zero.

Configurations (1) or (2) provide the effect that it is possible to enter the special operation mode with a simple operation in comparison with the prior art when the ignition is turned on while pressing the input switch. Moreover, although the information in the special operation mode is displayed only for a few seconds or minutes after the ignition is turned on (engine is started), the vehicle is surely stopped for a few seconds or minutes after the engine is started, so that no display is made during driving.

Since complicated information is transmitted in the special operation mode, the lamp is obliged to blink in a complicated pattern on the display section consisting of a lamp. Therefore, when the special operation mode is entered during driving, it causes the driver's attention to be dangerously distracted, however, the present invention does not cause such fear, and provides safety.

Moreover, in configuration (2), the special operation mode will not be entered unless the wheel speed is zero even in the situation where the ignition must be switched from the OFF to the ON state while the vehicle is moving, for example, when the vehicle is still moving after the gear is set to neutral due to engine failure. Thus, the driver's attention will not be distracted by the blinking lamp during trouble, with more enhanced safety.

Embodiments of the invention will be described, by way of example only, in conjunction with the attached diagrammatic drawings in which:
Figure 1 is an illustration of one embodiment of an apparatus for alarming abnormality of tyre air pressure of the present invention;
Figure 2 is an illustration of another embodiment of an apparatus for alarming abnormality of tyre air pressure of the present invention;
Figure 3 is a flow chart of the apparatus for alarming abnormality of tyre air pressure shown in Figures 1 and 2;
Figure 4 is an illustration of still another embodiment of an apparatus for alarming abnormality of tyre air pressure of the present invention; and
Figure 5 is a flow chart of the apparatus for alarming abnormality of tyre air pressure shown in Figure 4.

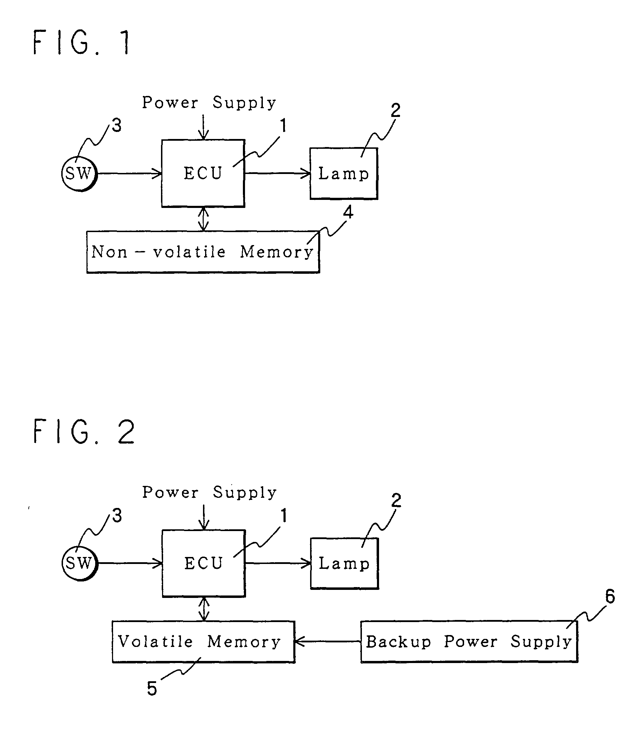

In this apparatus for alarming abnormality of tyre air pressure, as shown in Figure 1, an ECU 1 is equipped with a lamp 2 as a display section, an input switch 3, and a non-volatile memory 4. Alternatively, as shown in Figure 2, it is possible to connect a volatile memory 5 and a backup power supply 6 to ECU 1 instead of the non-volatile memory 4.

The lamp 2 transmits a plurality of information by changing numbers of blinks of the lamp and the length of the blinks.

The input switch 3 feeds the ON/OFF information into the ECU, and, normally, it is possible to use a switch used for other purposes such as initialising the air pressure information.

As described above, it is possible to utilise any ECU that is equipped with a switch capable of feeding the ON/OFF information into this unit as an apparatus for alarming abnormality of tyre air pressure of the present invention.

The non-volatile memory 4 is a memory that is configured so that the memory will not be erased even if the power is turned off. It is possible to use, for example, EEPROM (Electrically Erasable and Programmable ROM).

Moreover, it is possible to use a volatile memory 5 to which a backup power supply 6 is connected instead of the non-volatile memory 4. In this case, it is possible to use a static RAM (SRAM), a dynamic RAM (DRAM) and the like as a volatile memory 5.

Thus, the present invention is configured so that the information in the special operation mode will not be erased even if the engine, ignition, or battery cable is disconnected.

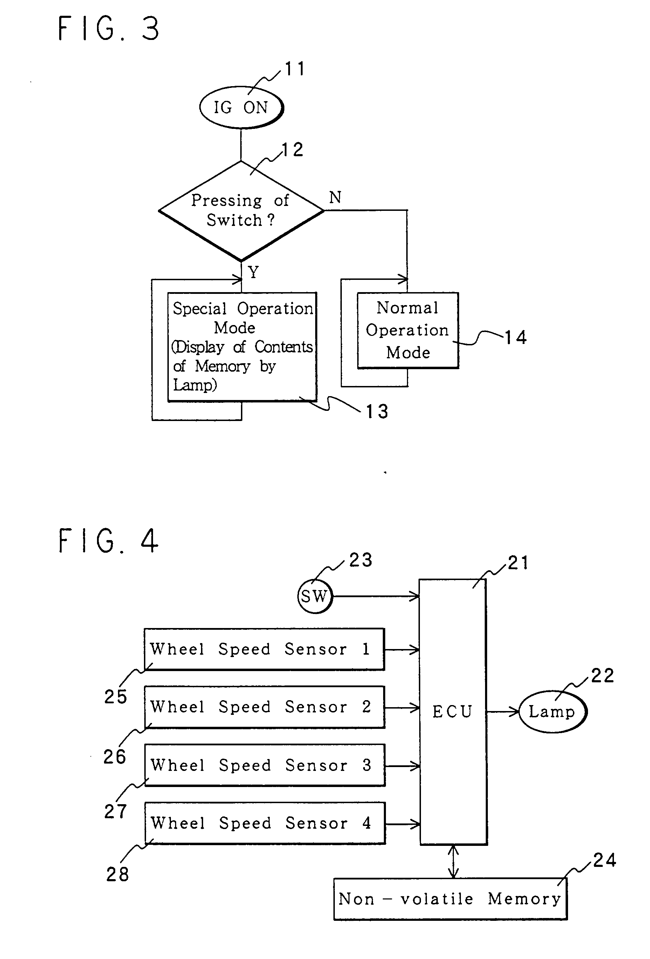

The apparati for alarming abnormality of tyre air pressure as shown in Figures 1 and 2 operate in accordance with the flow chart chown in Figure 3. This, when the driver turns on the ignition (step 11), it is judged whether or not the input switch is pressed (step 12), the information of the special operation mode is displayed on the lamp if the input switch is pressed (step 13), and the normal operation mode is conducted if the input switch is not pressed (step 14).

As described above, the information is displayed on the display section (lamp) only by turning the key while pressing the input switch. This information indicates failure of the internal and external failure of the apparatus for alarming abnormality of tyre air pressure by a failure code (failure code display mode), when the special operation mode is a self-diagnosis mode, and indicates the position of an abnormal tyre when the special operation mode is an abnormal tyre position display mode.

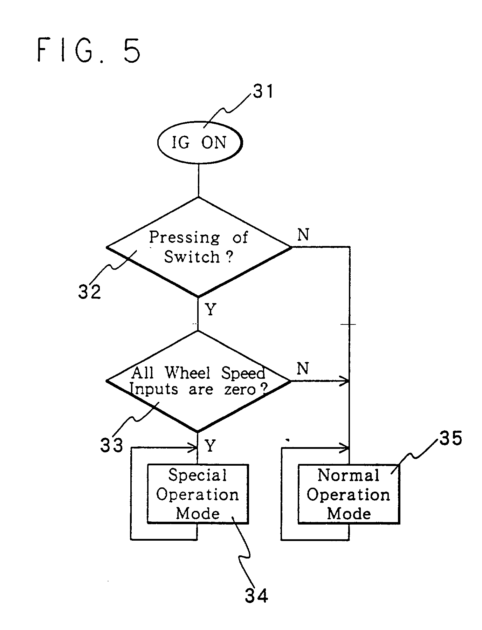

Another embodiment of an apparatus for alarming abnormality of tyre air pressure of the invention will now be described based on Figure 4 and Figure 5. This embodiment has the configuration of (2). As shown in Figure 4, in this apparatus for alarming abnormality of tyre air pressure, an ECU 21 is equipped with a lamp 22 as a display section, an input switch 23, a non-volatile memory 24, and wheel speed sensors 25-28.

For the wheel speed sensors it is possible to use the sensors 25-28 that are used for the ABS (Antilock Braking System), TCS (Traction Control System), and DSC )Dynamic Stability Control). The apparatus is configured so that the special operation mode is not entered unless the wheel speed sensors 25-28 detect that the speed of the wheel is zero even if the ignition is turned on while pressing the input switch 23.

Moreover, it is possible to provide a volatile memory and backup power supply instead of the non-volatile memory like in the case shown in Figure 2.

In this apparatus no information alarming abnormality of tyre air pressure is displayed on the display section (lamp) when the vehicle is stationary since the wheel speed sensors do not feed signals for wheel speed even if the key is turned while pressing the input switch.

The apparatus for alarming abnormality of tyre air pressure shown in Figure 4 operates in accordance with the flow chart shown in Figure 5. Thus, when the driver turns on the ignition (step 31), the driver determines whether or not the input switch is pressed (step 32), and, if the input switch is pressed, then, it is judged whether the wheel speed is zero or not (step 33), the information of the special operation mode then is displayed on the lamp if the wheel speed is zero (step 34). Moreover, if the input switch is not pressed (step 32), the normal operation mode is conducted (step 35). The normal operation mode will be also conducted when the wheel speed is not zero.

As described above, the apparatus for alarming abnormality of tyre air pressure in the present invention is capable of preventing a dangerous action where the driver reads a failure code or the position of a tyre having abnormal internal air pressure while driving his vehicle, and yet, when starting the vehicle or on entry, it is possible to conduct an entry or enquiry operation by using a simple procedure.

Though several embodiments of the present invention are described above, it is to be understood that the present invention is not limited only to the above-mentioned and various changes and modifications might be made in the invention without departing from the scope thereof.

## Claims

1. An apparatus alarming abnormality of tyre air pressure having a normal operation mode and a special mode comprising a display section (2,13,32) capable of displaying information in said normal operation mode; an ignition switch, wheel speed sensors (25-28) and a memory (4, 5, 24) whose information does not disappear when the ignition switch is turned off, characterised by an input switch (3, 11, 23) capable of entering on/off information so that the apparatus may be used to enter the special operation mode before driving by pressing the input switch (3, 11, 23) and then switching on the ignition but only if the wheel speed sensors (25-28) have detected that all the wheels are not moving and, in the special operation mode, the information stored in the memory then is displayed on the display section (2, 13, 22).

2. An apparatus according to claim 1, characterised in that the memory is a non-volatile memory (4).

3. An apparatus according to claim 1, characterised in that the memory is a volatile memory (5) to which a backup power supply (6) is connected.

4. A method of alarming abnormality of air pressure using the apparatus of any of claims 1 to 3 in which a special operating mode can be entered, characterised by the steps before driving, of pressing an input switch, (3, 11, 23), switching on the vehicle ignition, detecting that all the wheels are not moving and only then entering said special operation mode to display detailed information stored in a memory (4, 5, 24) whose information does not disappear when the vehicle ingition is turned off.

5. A method according to claim 4, characterised by storing the detailed information in a non-volatile memory or a volatile memory with an independent backup supply.

6. A method according to any of claims 1 to 5, characterised by displaying in the special operation mode self-diagnosis information for the apparatus and where appropriate which tyre on the vehicle is at an abnormal pressure.

## Patentansprüche

1. Vorrichtung zum Warnen vor Abweichungen des Reifenluftdrucks mit einer normalen Betriebsart und einer speziellen Betriebsart, umfassend einen Anzeigeabschnitt (2, 13, 32), der in der Lage ist, in der normalen Betriebsart Information anzuzeigen; einen Zündschalter, Raddrehzahlsensoren (25-28) und einen Speicher (4, 5, 24), dessen Information nicht verschwindet, wenn der Zündschalter ausgeschaltet ist, gekennzeichnet durch einen Eingabeschalter (3, 11, 23), der in der Lage ist, Ein/Aus-Information einzugeben, so daß die Vorrichtung dazu verwendet werden kann, vor dem Fahren in die spezielle Betriebsart einzutreten, indem der Eingabeschalter (3, 11, 23) gedrückt und dann der Zündschalter eingeschaltet wird, aber nur dann, wenn die Raddrehzahlsensoren (25-28) detektiert haben, daß sich keines der Räder bewegt, und wobei dann in der speziellen Betriebsart die im Speicher gespeicherte Information am Anzeigeabschnitt (2, 13, 22) angezeigt wird.

2. Vorrichtung nach Anspruch 1,
dadurch gekennzeichnet, daß der Speicher ein nichtflüchtiger Speicher (4) ist.

3. Vorrichtung nach Anspruch 1,
dadurch gekennzeichnet, daß der Speicher ein flüchtiger Speicher (5) ist, an den eine Sicherheitsstromversorgung (6) angeschlossen ist.

4. Verfahren zum Warnen vor Abweichungen des Luftdrucks unter Verwendung der Vorrichtung nach einem der Ansprüche 1 bis 3, bei der in eine spezielle Betriebsart eingetreten werden kann, gekennzeichnet durch die Schritte, daß vor dem Fahren ein Eingabeschalter (3, 11, 23) gedrückt wird, die Fahrzeugzündung eingeschaltet wird, detektiert wird, daß sich keines der Räder bewegt und nur dann in die spezielle Betriebsart eingetreten wird, um detaillierte Information anzuzeigen, die in einem Speicher (4, 5, 24) gespeichert ist, dessen Information nicht verschwindet, wenn die Fahrzeugzündung ausgeschaltet wird.

5. Verfahren nach Anspruch 4,
dadurch gekennzeichnet, daß die detailierte Information in einem nichtflüchtigen Speicher oder einem flüchtigen Speicher mit einer unabhängigen Sicherheitsversorgung gespeichert wird.

6. Verfahren nach einem der Ansprüche 1 bis 5,
dadurch gekennzeichnet, daß in der speziellen Betriebsart Eigendiagnoseinformation für die Vorrichtung angezeigt wird und, wenn es angebracht ist, angezeigt wird, welcher Reifen an dem Fahrzeug einen abweichenden Druck aufweist.

## Revendications

1. Appareil destiné à donner une alarme en cas d'anomalie de la pression d'air d'un pneumatique ayant un mode normal et un mode spécial de fonctionnement, comprenant une section d'affichage (2, 13, 32) qui peut afficher des informations dans le mode normal de fonctionnement, un interrupteur d'allumage, des capteurs (25-28) de vitesses de roues et une mémoire (4, 5, 24), les informations ne disparaissant pas lorsque l'interrupteur d'allumage est ouvert, caractérisé par un interrupteur d'entrée (3, 11, 23) permettant la saisie d'informations par tout ou rien afin que l'appareil puisse être utilisé pour le passage à un mode spécial de fonctionnement avant la conduite, par enfoncement de l'interrupteur d'entrée (3, 11, 23), puis par fermeture de l'interrupteur d'allumage, mais uniquement si les capteurs de vitesses de roues (25-28) ont détecté le fait qu'aucune des roues ne se déplace et, dans le mode spécial de fonctionnement, les informations conservées dans la mémoire sont affichées sur la section d'affichage (2, 13, 22).

2. Appareil selon la revendication 1, caractérisé en ce que la mémoire est une mémoire permanente (4).

3. Appareil selon la revendication 1, caractérisé en ce que la mémoire est une mémoire non permanente (5) à laquelle est connectée une alimentation de secours (6).

4. Procédé destiné à donner une alarme en cas d'anomalie de la pression d'air, à l'aide de l'appareil selon l'une des revendications 1 à 3, dans lequel un mode spécial de fonctionnement peut être utilisé, caractérisé par l'exécution des étapes suivantes, avant la conduite : l'enfoncement d'un interrupteur d'entrée (3, 11, 23), la fermeture de l'interrupteur d'allumage du véhicule, la détection du fait qu'aucune des roues ne se déplace, puis seulement le passage au mode spécial de fonctionnement pour l'affichage d'informations détaillées conservées dans une mémoire (4, 5, 24), l'information ne disparaissant pas lorsque l'interrupteur d'allumage du véhicule est ouvert.

5. Procédé selon la revendication 4, caractérisé par la mémorisation des informations détaillées dans une mémoire permanente ou une mémoire non permanente munie d'une alimentation indépendante de secours.

6. Procédé selon l'une quelconque des revendications 1 à 5, caractérisé par l'affichage, dans le mode spécial de fonctionnement, d'informations de diagnostic automatique de l'appareil et, le cas échéant, du pneumatique monté sur le véhicule qui présente une pression anormale.
